# EUROPÄISCHE PATENTSCHRIFT

(11) **EP 0 638 106 B1**
(45) Veröffentlichungstag und Bekanntmachung des Hinweises auf die Patenterteilung: **09.07.1997**
(21) Anmeldenummer: 93911482.3
(22) Anmeldetag: 20.04.1993
(51) Int. Cl.: C08K 5/17, C08K 5/34

(54) **AMINOVERBINDUNGEN ALS VERARBEITUNGSSTABILISATOREN FÜR THERMOPLASTISCHE KUNSTSTOFFE**
AMINO COMPOUNDS AS PROCESSING STABILISERS FOR THERMOPLASTIC MATERIALS
COMPOSES AMINES UTILES EN TANT QUE STABILISATEURS DE TRANSFORMATION POUR MATIERES THERMOPLASTIQUES

(30) Priorität: 29.04.1992 DE 4214027
(43) Veröffentlichungstag der Anmeldung: 15.02.1995
(73) Patentinhaber: BASF Aktiengesellschaft, 67063 Ludwigshafen (DE)
(72) Erfinder: AUMUELLER, Alexander, D-6730 Neustadt (DE); TRAUTH, Hubert, D-6724 Dudenhofen (DE)
(86) Internationale Anmeldenummer: EP9300951
(87) Internationale Veröffentlichungsnummer: WO9322376

(56) Entgegenhaltungen:
- EP-A- 0 479 436
- DE-A- 1 161 897
- FR-A- 2 365 607
- FR-A- 2 536 754
- US-A- 3 485 786

## Beschreibung

Während der Verarbeitung von thermoplastischen Kunststoffen bei erhöhten Temperaturen von 250 bis zu 350°C, z.B. beim Extrudieren, treten vor allem in Anwesenheit von Luftsauerstoff kettenabbauende oder -vernetzende Reaktionen auf, die die mechanischen und ästhetischen Eigenschaften der Polymeren unerwünscht verändern und den Kunststoff zum Teil sogar unbrauchbar machen.

Zur Verhinderung dieser unerwünschten Veränderungen müssen den Kunststoffen sogenannte Verarbeitungsstabilisatoren zugesetzt werden.

Als Verbindungen des Standes der Technik gelten hier Sulfide, Phosphite, Phosphonite oder phenolische Antioxidantien oder Gemische solcher Verbindungen (siehe R. Gächter und H. Müller, Taschenbuch der Kunststoffadditive, Carl Hanser Verlag, 3. Ausgabe, München, Wien 1990, S. 42-103). In der DE-A 11 61 897 wird die Stabilisierung von organischen Stoffen gegen Schädigung von Luftsauerstoff durch bestimmte aromatische Reste enthaltende Di- oder Tetramine beschrieben. Nicht immer jedoch genügen die Verbindungen des Standes der Technik hinsichtlich Wirksamkeit, Thermostabilität, geringer Verfärbungsneigung und Verträglichkeit den Anforderungen.

Aufgabe der Erfindung war es daher, neue, gut zugängliche Verarbeitungsstabilistoren zu finden, die diese Nachteile nicht aufweisen.

Gelöst werden konnte die Aufgabe überraschenderweise mit den Aminoverbindungen gemäß Anspruch 1.

Die Variable m ist 2 oder vorzugsweise 3. Die Variable n bezeichnet eine ganze Zahl von 1 bis 6, bevorzugt für n ist 1 oder 2.

Alkylgruppen für R¹ bis R⁵ können verzweigt oder unverzweigt sein.

C₁-C₁₈-Alkylgruppen für R¹ bis R⁵ sind beispielsweise Methyl, Ethyl, n-Propyl, iso-Propyl, n-Butyl, iso-Butyl, n-Pentyl, 2-Methylbutyl, 2- oder 3-Methylpentyl, n-Hexyl, n-Heptyl, n-Octyl, 3-Methylhexyl, n-Decyl, Tridecyl, Lauryl oder Stearyl. Bevorzugt für R¹ und R² ist Methyl und für R³ C₁- bis C₁₈-Alkyl.

C₃-C₈-Alkenylgruppen für R¹ bis R⁵ sind beispielsweise 2-Butenyl, 2-Pentenyl, 2-Hexenyl, 2-Heptenyl oder 2-Octenyl und insbesondere Allyl.

C₅-C₁₂-Cycloalkylgruppen für R¹ bis R⁵ sind beispielsweise Cyclopentyl, Cyclohexyl, 4-Methylcyclohexyl, Cycloheptyl, Cyclooctyl oder Cyclododecyl. Bevorzugt ist Cyclohexyl.

C₇-C₁₂-Phenylalkylreste für R¹ bis R⁵ sind beispielsweise Benzyl, 2-, 3- oder 4-Methylbenzyl, Phenylethyl, Phenylpropyl, Phenylbutyl, 2-, 3- oder 4-Methoxybenzyl, 2-, 3- oder 4-Ethylbenzyl, 2-, 3- oder 4-Ethoxybenzyl oder 4-Dodecylbenzyl. Bevorzugt ist Benzyl.

Besonders bevorzugt für R¹ und R² sowie für R⁴ und R⁵ sind Wasserstoff oder Methyl. Besonders bevorzugt für R³ ist zusätzlich eine Gruppierung der Formel

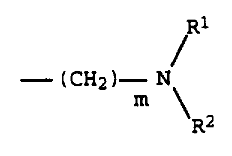

Der Rest X ist Sauerstoff oder NR³, wobei R³ die angegebene Bedeutung hat.

3- bis 12-gliedrige gesättigte oder ungesättigte Heterocyclenreste 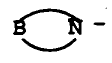 sind beispielsweise: 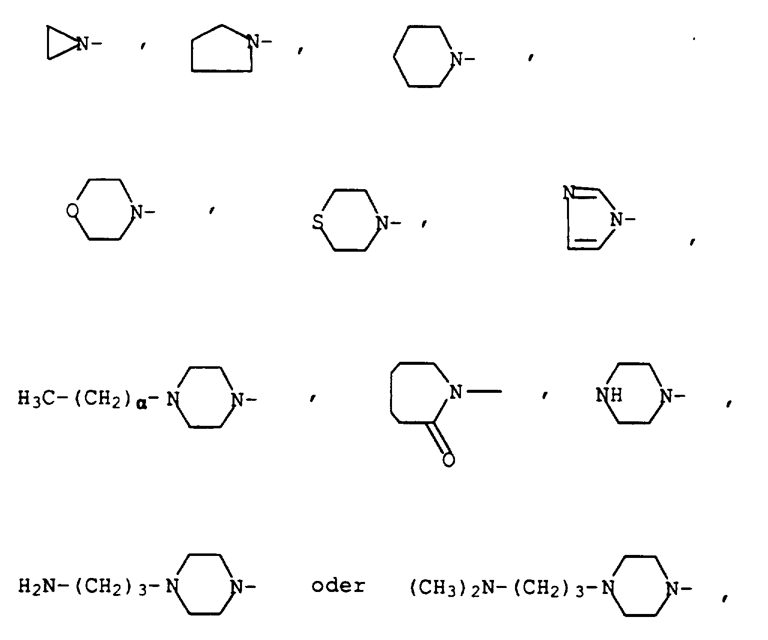 wobei α eine Zahl zwischen 0 und 17 bedeutet.

Bevorzugt sind hierbei die Gruppierungen, die sich vom Morpholin oder Piperazin ableiten.

Im Falle von n = 1 kann A neben Wasserstoff beispielsweise sein:
C₃- bis C₂₄-Alkenyl wie Allyl, 1-Pentenyl, 1-Hexenyl, 1-Heptenyl, 1-Octenyl, 1-Decenyl oder 1-Dodecenyl. Bevorzugt ist Oleyl.

C₁- bis C₆₀-Alkyl, das durch bis zu 29 Sauerstoffatome oder NR³ unterbrochen sein kann, für A ist beispielsweise: 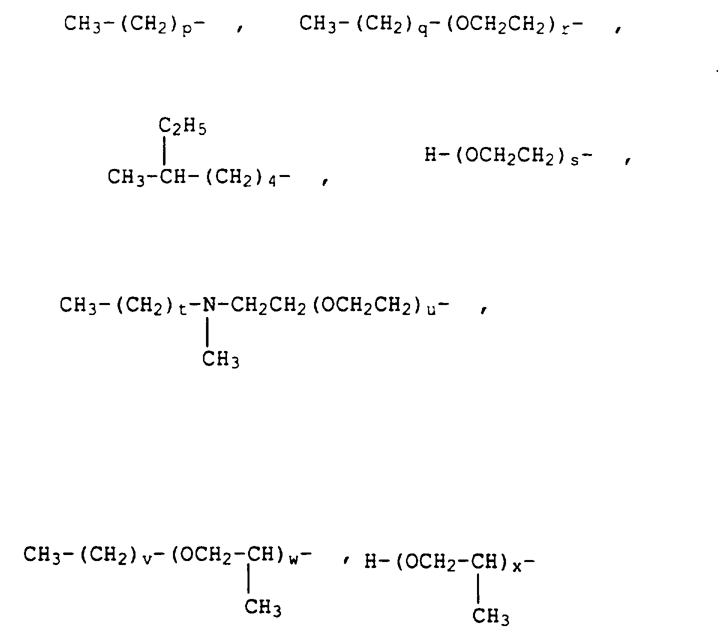 oder 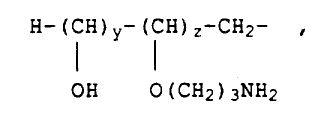 wobei
p eine ganze Zahl von 0 bis 24,
q und r ganze Zahlen von 0 bis 30,
s eine ganze Zahl von 1 bis 30,
t und n ganze Zahlen von 0 bis 30,
v und w ganze Zahlen von 0 bis 30,
x eine ganze Zahl von 1 bis 30 und
y und z ganze Zahlen von 0 bis 20 darstellen.

Bevorzugt unter diesen Gruppen sind CH₃-(CH₂)ₚ-Reste mit p gleich 11 bis 17.

Cycloalkylgruppen für A sind beispielsweise:
Cyclopropyl, Cyclopentyl, Cyclohexyl, 4-Methylcyclohexyl, 2,4-Dimethylcyclohexyl, Cycloheptyl, Cyclooctyl oder Cyclododecyl.

C₇- bis C₂₀-Bicycloalkylgruppen für A sind beispielsweise: Adamantyl, Norbornyl oder 1- oder 2-Perhydronaphthyl.

Im Falle von n > 1 steht A für mehrwertige organische Reste. C₂- bis C₂₄-Alkylengruppen für A sind beispielsweise: 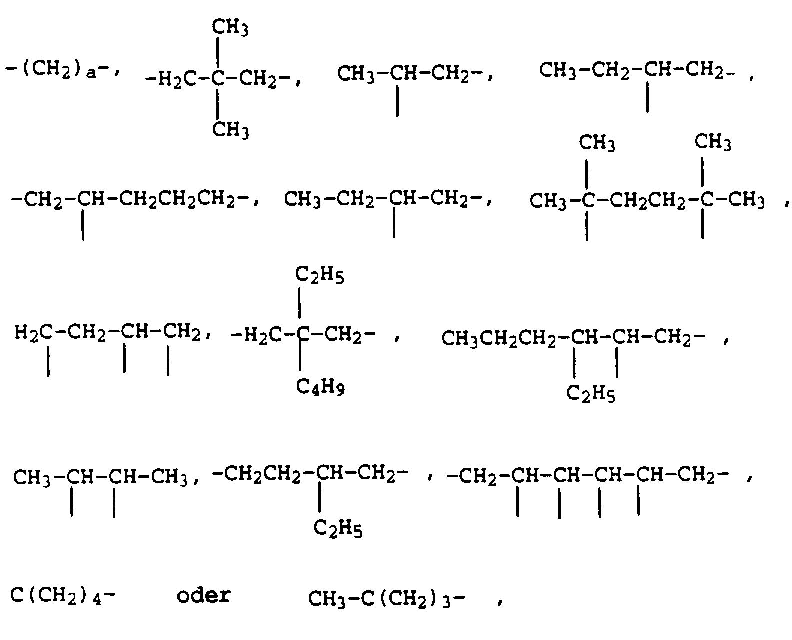 wobei a eine ganze Zahl von 2 bis 24 ist.

C₄- bis C₆₀-Alkylengruppen, die bis zu 29 mal durch NR³ oder Sauerstoff unterbrochen sein können, sind beispielsweise: 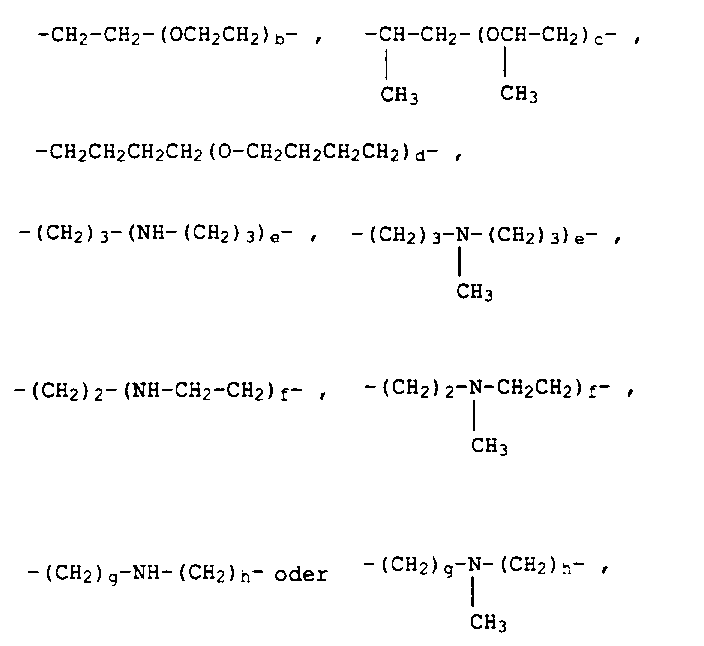 mit
b = 1 bis 29,
c = 1 bis 19,
d = 1 bis 14,
e = 1 bis 19,
f = 1 bis 29,
g = 2 bis 58
h = 2 bis 58 mit der Maßgabe, daß g + h ≤ 60 ist.

C₃- bis C₁₂-Alkylenreste, die bis zu 6 Hydroxy-, C₁- bis C₄-Alkoxy-, Amino- oder C₁- bis C₃-Hydroxyalkylgruppen tragen können, sind beispielsweise: 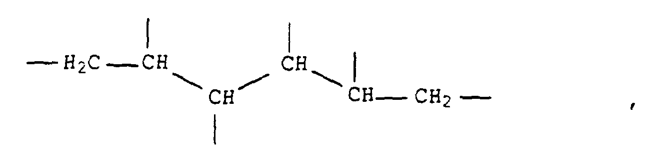 wobei jede der freien Bindungsstellen z.B. eine Hydroxygruppe, Aminogruppe oder Methoxygruppe tragen kann, mindestens eine der freien Bindungsstellen aber durch eine Gruppierung der Formel 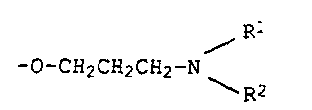 substituiert ist.

C₅- bis C₁₂-Cycloalkylengruppen für A sind beispielsweise: 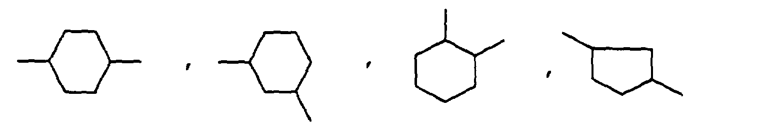 oder

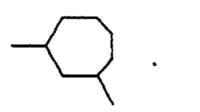

C₇- bis C₂₄ Bi- oder Polycycloalkylenreste sind beispielsweise: 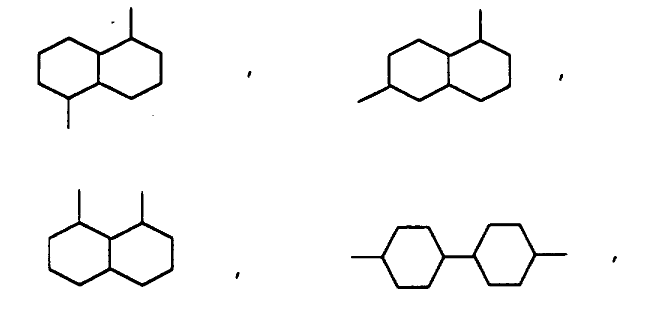 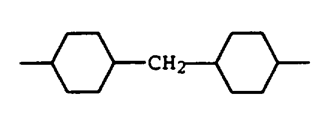 oder

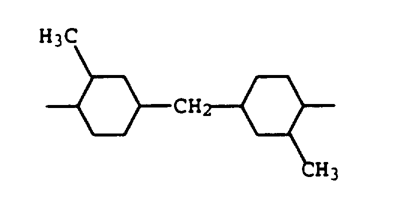

Die Verbindungen der allgemeinen Formel (I) und deren Herstellung sind an sich bekannt. Sie lassen sich beispielsweise durch Michael-Addition von Acrylnitril an Mono- oder Polyalkohole bzw. Mono- oder Polyamine und anschließende Reduktion der Cyangruppierung leicht herstellen (siehe O. Bayer, Angew. Chem. 61, 229 (1949) und dort zitierte Literatur).

Die Verbindungen gemäß Anspruch 1 eignen sich in hervorragender Weise zum Stabilisieren von Polyolefinen während der Verarbeitung gegen Sauerstoff und Wärme. Sie werden dem zu stabilisierenden Material in einer Konzentration von 0,001 bis 5 Gew.-%, vorzugsweise von 0,01 bis 2 Gew.-% und besonders bevorzugt von 0,1 bis 0,5 Gew.-% vor seiner Verarbeitung zugesetzt.

Zur Vermischung der erfindungsgemäß zu verwendenden Verbindungen mit Kunststoffen können alle bekannten Vorrichtungen und Methoden zum Einmischen von Stabilisierungsmitteln oder anderen Zusätzen in Polymere angewandt werden.

Das erfindungsgemäß stabilisierte organische Material kann gegebenenfalls noch weitere Additive enthalten, z.B. Antioxidantien, Lichtstabilisierungsmittel, Metalldesaktivatoren, antistatische Mittel, flammhemmende Mittel, Pigmente und/oder Füllstoffe.

Antioxidantien und Lichtstabilisatoren, die neben den Verbindungen I und II zugesetzt werden können, sind z.B. Verbindungen auf der Basis sterisch gehinderter Phenole oder Schwefel oder Phosphor enthaltende Costabilisatoren.

Als derartige phenolische Antioxidationsmittel seien beispielsweise 2,6-Di-tert.-butyl-4-methylphenol, n-Octadecyl-β-(3,5-di-tert.-butyl-4-hydroxyphenyl)-propionat, 1,1,3-Tris-(2-methyl-4-hydroxy-5-tert.-butylphenyl)-butan, 1,3,5-Trimethyl-2,4,6-tris-(3,5-di-tert.-butyl-4-hydroxybenzyl)-benzol, 1,3,5-Tris-(3,5-di-tert.-butyl-4-hydroxybenzyl)-isocyanurat, 1,3,5-Tris-[β-(3,5-di-tert.-butyl-4-hydroxyphenyl)-propionylethyl]-isocyanurat, 1,3,5-Tris-(2,6-dimethyl-3-hydroxy-4-tert.-butylbenzyl)-isocyanurat, α-Tocopherol und/oder Pentaerythrit-tetrakis-[β-3,5-di-tert.-butyl-4-hydroxy-phenyl)-propionat] erwähnt.

Als Schwefel enthaltende Antioxidationsmittel seien beispielsweise Dilaurylthiodipropionat, Dimyristylthiodipropionat, Distearylthiodipropionat, Pentaerythrittetrakis-(β-laurylthiopropionat) und Pentaerythrittetrakis-(β-hexylthiopropionat) genannt.

Weitere Antioxidantien und Lichtstabilisatoren, die zusammen mit den Verbindungen I und II verwendet werden können, sind z.B. 2-(2'-Hydroxyphenyl)-benztriazole, 2-Hydroxybenzophenone, Arylester von Hydroxybenzoesäuren, α-Cyanozimtsäurederivate, Benzimidazolcarbonsäureanilide, Nickelverbindungen, Oxalsäuredianilide oder HALS-Verbindungen.

Als Kunststoffe, die durch die Verbindungen gemäß Anspruch 1 stabilisiert werden können, seien beispielsweise genannt:

Polymere von Mono- und Diolefinen, wie z.B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren.

Mit α-Tocopherol beispielsweise bilden Verbindungen der allgemeinen Formel I und II synergistische Mischungen. Dabei kann das Mischungsverhältnis 10:1 bis 1:10 betragen. Bevorzugt ist ein Verhältnis von Amin:α-Tocopherol von 10:1.

Beispiele für erfindungsgemäß zu verwendende Verbindungen sind: 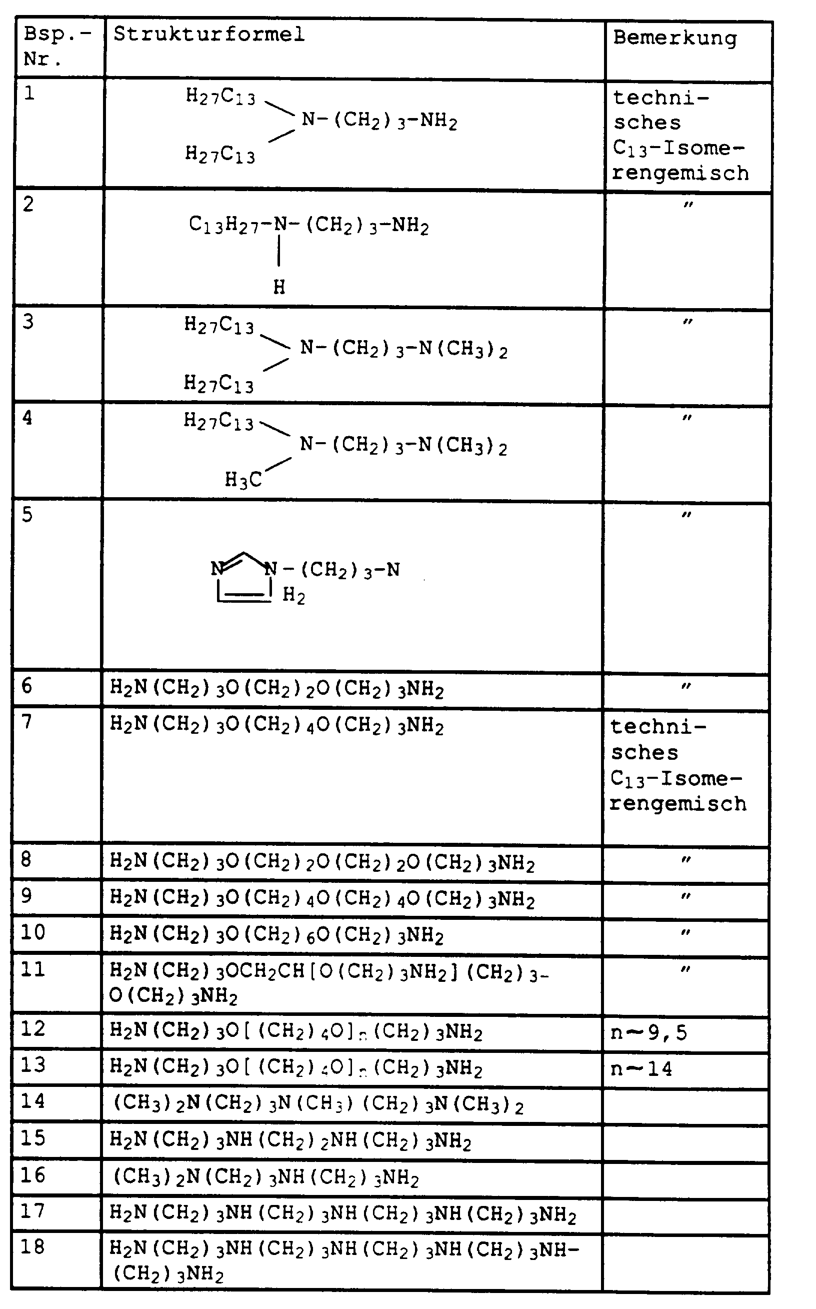 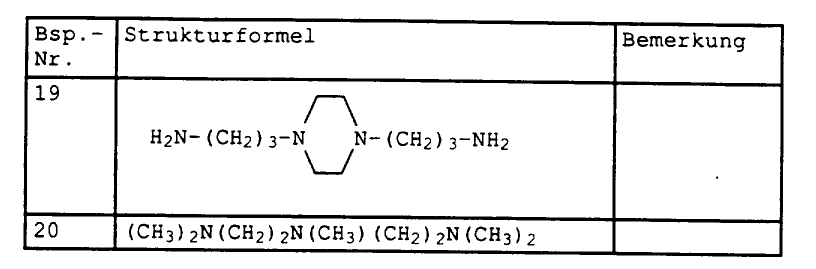 Anwendungsbeispiel

0,1 Gew.-% des Stabilisators bzw. der Stabilisatormischung, bezogen auf das zu stabilisierende Material werden mit additiv-freiem Polypropylen gemischt und bei 260°C über einen Extruder mehrfach verarbeitet und granuliert. Nach dem ersten, dritten und fünften Durchgang wird der Schmelzindex (MFI) des Substrats mittels Schmelzviskosimeter nach DIN 53735 gemessen. Die Versuchsergebnisse sind in Tabelle 1 zusammengefaßt.

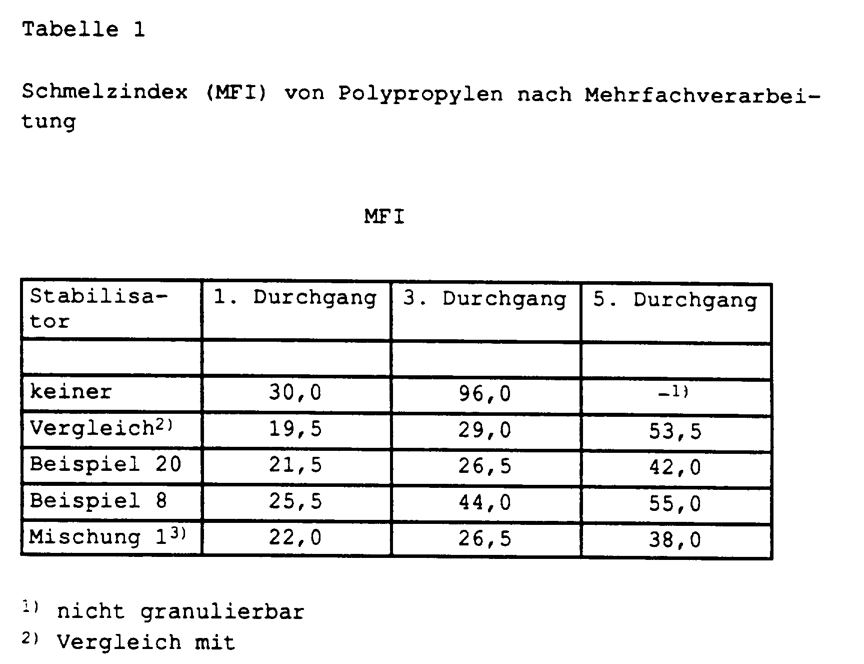

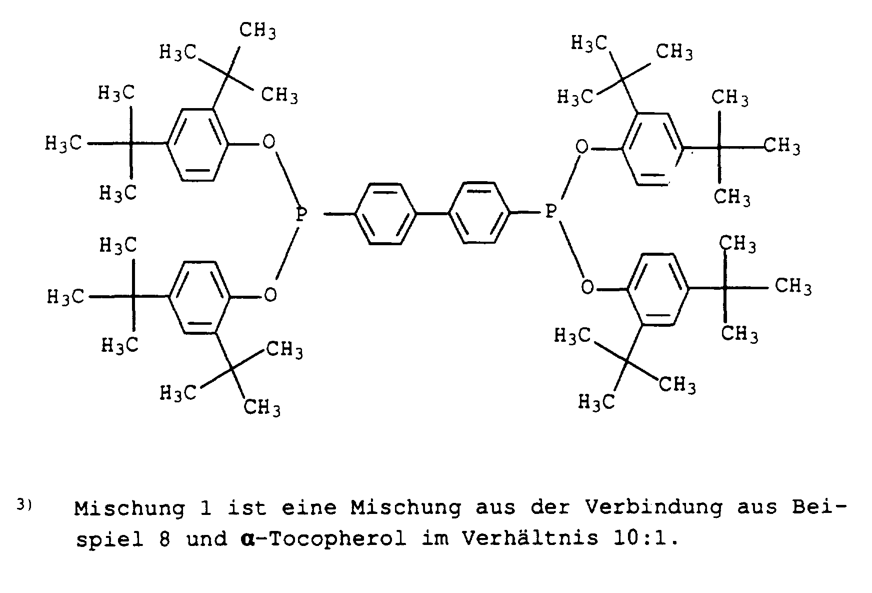

## Patentansprüche

1. Verwendung von Verbindungen der allgemeinen Formeln (I) oder (II) 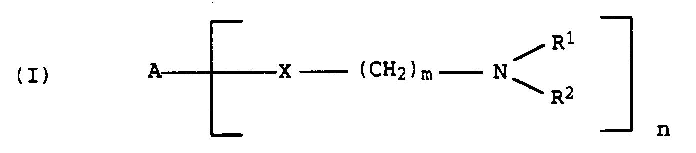 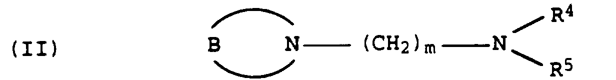 worin
m 2 oder 3,
n eine Zahl von 1 bis 6,
R¹ und R² unabhängig voneinander Wasserstoff, C₁- bis C₁₈-Alkyl, C₃- bis C₈-Alkenyl oder C₅- bis C₁₂-Cycloalkyl,
R⁴ und R⁵ unabhängig voneinander Wasserstoff, C₁- bis C₁₈-Alkyl, C₃- bis C₈-Alkenyl, C₅- bis C₁₂-Cycloalkyl, C₇- bis C₁₂-Phenylalkyl, wobei der Phenylkern durch bis zu 3 C₁-bis C₁₂-Alkyl- oder C₁- bis C₁₂-Alkoxygruppen substituiert sein kann,
X Sauerstoff oder NR³,
R³ ein Rest R¹ oder eine Gruppierung der Formel 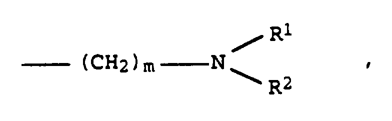
B die Ergänzung zu einem 3- bis 12-gliedrigen gesättigten oder ungesättigten ein- oder mehrkernigen Heterocyclus, der als bis zu 2 weitere Heteroatome Stickstoff, Sauerstoff oder Schwefel enthalten kann, wobei die weiteren Stickstoffatome als Substituenten Wasserstoff, C₁- bis C₈-Alkyl oder eine Gruppierung der Formel 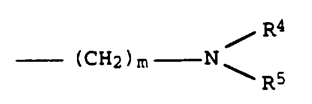 tragen kannen und der Heterocyclus noch bis zu 3 Carbonylgruppen, C₁- bis C₈-Alkyl-, Phenyl-, C₇- bis C₁₂-Phenylalkyl- oder C₅- bis C₁₂-Cycloalkylsubstituenten aufweisen kann, und
A für n = 1
Wasserstoff, C₃- bis C₂₄-Alkenyl, C₁- bis C₆₀-Alkyl, das durch bis zu 29 Sauerstoffatome oder NR³ unterbrochen und durch bis zu 6 Hydroxy- oder Aminogruppen substituiert sein kann, C₃- bis C₁₂-Cycloalkyl, das durch bis zu 3 C₁-bis C₁₂-Alkyl-Reste substituiert sein kann, C₇- bis C₂₀-Bicycloalkyl oder eine Gruppierung der Formel 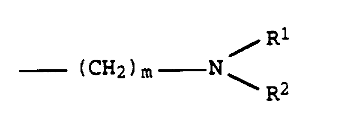 und
A für n > 1
C₂- bis C₂₄-Alkylen, C₄- bis C₆₀-Alkylen, das durch bis zu 5 NR³-Gruppen oder bis zu 28 Sauerstoffatome unterbrochen ist, C₃- bis C₁₂-Alkylen, das bis zu 6-Hydroxy-, C₁- bis C₄-Alkoxy-, Amino- oder C₁- bis C₃-Hydroxyalkylgruppen trägt, C₅- bis C₁₂-Cycloalkylen oder C₇- bis C₂₄-Bi- oder Polycycloalkylen, wobei für n > 1 die Alkylenreste auch mehr als 2-bindig sein können, bedeuten, als Verarbeitungsstabilisatoren für thermoplastische Kunststoffe.

2. Verwendung von Verbindungen gemäß Anspruch 1, bei denen n 1 oder 2 ist.

3. Verwendung von Verbindungen gemäß Anspruch 1, bei denen R¹ und R² bzw. R⁴ und R⁵ unabhängig voneinander Wasserstoff oder C₁- bis C₄-Alkyl sind.

4. Verwendung von Verbindungen gemäß Anspruch 1, bei denen R¹ und R² bzw. R⁴ und R⁵ unabhängig voneinander Wasserstoff oder Methyl sind.

5. Verwendung von Verbindungen gemäß Anspruch 1, bei denen R³ Wasserstoff, C₁- bis C₁₈-Alkyl oder ein Rest der Formel 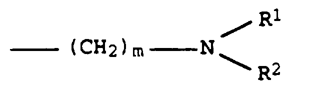 ist.

6. Verwendung von Verbindungen gemäß Anspruch 1, bei denen B zusammen mit dem Stickstoff ein 5- oder 6-gliedriger, gesättigter oder ungesättigter Heterocyclus ist.

7. Verwendung von Verbindungen gemäß Anspruch 1, bei denen B zusammen mit dem Stickstoff ein 5- oder 6-gliedriger Heterocyclus ist, der noch ein N- oder O-Atom enthalten kann.

8. Verwendung von Verbindungen gemäß Anspruch 1, bei denen A für n = 1 Wasserstoff oder C₁- bis C₁₈-Alkyl ist.

9. Verwendung von Verbindungen gemäß Anspruch 1, bei denen A für n > 1 C₂- bis C₉-Alkylen, das 2- bis 6-bindig sein kann, oder durch
-O- oder 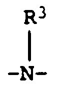 unterbrochenes C₄- bis C₁₂-Alkylen ist.

10. Verwendung von Verbindungen der allgemeinen Formel (I) als Verarbeitungsstabilisatoren für Polyolefine.

11. Verwendung von Verbindungen der allgemeinen Formel (I) als Verarbeitungsstabilisatoren für Polyethylen.

12. Verwendung von Verbindungen der allgemeinen Formel (I) als Verarbeitungsstabilisatoren für Polypropylen.

13. Verwendung von synergistischen Mischungen von Verbindungen der allgemeinen Formel (I) und/oder II und α-Tocopherol als Verarbeitungsstabilisatoren für thermoplastische Kunststoffe.

14. Verwendung von Mischungen gemäß Anspruch 13 als Verarbeitungsstabilisatoren für Polyolefine.

## Claims

1. Use of compounds of the formula (I) or (II) 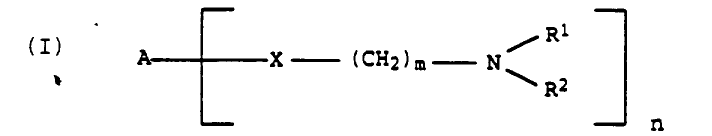 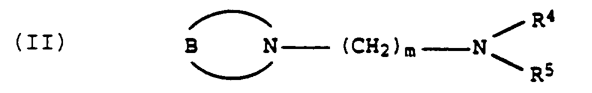 where
m is 2 or 3,
n is an integer from 1 to 6,
R¹ and R² are, independently of one another, hydrogen, C₁- to C₁₈-alkyl, C₃- to C₈-alkenyl or C₅- to C₁₂-cycloalkyl,
R⁴ and R⁵ are, independently of one another, hydrogen, C₁- to C₁₈-alkyl, C₃- to C₈-alkenyl, C₅- to C₁₂-cycloalkyl or C₇- to C₁₂-phenylalkyl, in which the phenyl ring may be substituted by up to 3 C₁- to C₁₂-alkyl or C₁- to C₁₂-alkoxy groups,
X is oxygen or NR³,
R³ is an R¹ radical or a group of the formula 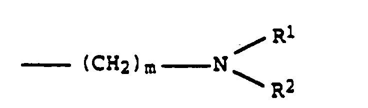
B completes a 3- to 12-membered saturated or unsaturated mononuclear or polynuclear heterocycle, which may contain, as up to 2 further hetero atoms, nitrogen, oxygen or sulfur, it being possible for the further nitrogen atoms to carry as substituents hydrogen, C₁- to C₈-alkyl or a group of the formula 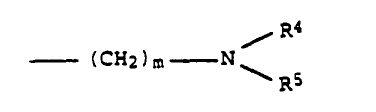 and for the heterocycle in addition to contain up to 3 carbonyl groups, C₁- to C₈-alkyl, phenyl, C₇- to C₁₂-pienylalkyl or C₅- to C₁₂-cycloalkyl substituents, and
A when n = 1
is hydrogen, C₃- to C₂₄-alkenyl, C₁- to C₆₀-alkyl, which may be interrupted by up to 29 oxygen atoms or NR³ and may be substituted by up to 6 hydroxyl or amino groups, C₃- to C₁₂-cycloalkyl, which may be substituted by up to 3 C₁- to C₁₂-alkyl radicals, C₇-to C₂₀-bicycloalkyl or a group of the formula 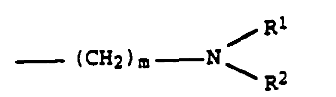 and
A when n > 1
is C₂- to C₂₄-alkylene, C₄- to C₆₀-alkylene, which may be interrupted by up to 5 NR³ groups or by up to 28 oxygen atoms, C₃- to C₁₂-alkylene, which carries up to 6 hydroxyl, C₁- to C₄-alkoxy, amino or C₁- to C₃-hydroxyalkyl groups, C₅- to C₁₂-cycloalkylene or C₇-to C₂₄-bicycloalkylene or polycycloalkylene, and when n > 1 the alkylene radicals may also be more than divalent,
as processing stabilizers for thermoplastic materials.

2. Use of compounds as claimed in claim 1, where n is 1 or 2.

3. Use of compounds as claimed in claim 1, where R¹ and R² or R⁴ and R⁵ are, independently of one another, hydrogen or C₁- to C₄-alkyl.

4. Use of compounds as claimed in claim 1, where R¹ and R² or R⁴ and R⁵ are, independently of one another, hydrogen or methyl.

5. Use of compounds as claimed in claim 1, where R³ is hydrogen, C₁- to C₁₈-alkyl or a radical of the formula

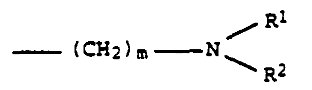

6. Use of compounds as claimed in claim 1, where B together with the nitrogen atom is a 5- or 6-membered, saturated or unsaturated heterocycle.

7. Use of compounds as claimed in claim 1, where B together with the nitrogen is a 5- or 6-membered heterocycle, which may also contain an N or O atom.

8. Use of compounds as claimed in claim 1, where A, for n = 1, is hydrogen or C₁- to C₁₈-alkyl.

9. Use of compounds as claimed in claim 1, where A, for n > 1, is C₂- to C₉-alkylene, which may be divalent to hexavalent, or is C₄- to C₁₂-alkylene interrupted by -O- or

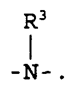

10. Use of compounds of the formula (I) as processing stabilizers for polyolefins.

11. Use of compounds of the formula (I) as processing stabilizers for polyethylene.

12. Use of compounds of the formula (I) as processing stabilizers for polypropylene.

13. Use of synergistic mixtures of compounds of the formula (I) and/or (II) and α-tocopherol as processing stabilizers for thermoplastic materials.

14. Use of mixtures as claimed in claim 13 as processing stabilizers for polyolefins.

## Revendications

1. Utilisation, comme stabilisants de mise en oeuvre pour matières thermoplastiques, de composés de formule générale (I) ou (II) 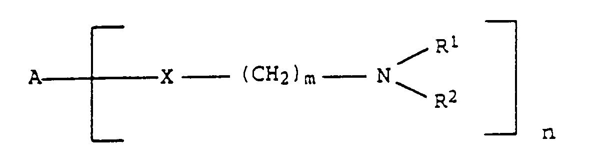 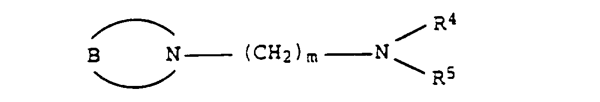 dans laquelle
m est mis pour 2 ou 3,
n est un nombre de 1 à 6,
R¹ et R² représentent chacun, indépendamment l'un de l'autre, un atome d'hydrogène ou un groupement alkyle en C₁-C₁₈, alcényle en C₃-C₈ ou cycloalkyle en C₅-C₁₂,
R⁴ et R⁵ représentent chacun, indépendamment l'un de l'autre, un atome d'hydrogène ou un groupement alkyle en C₁-C₁₈, alcényle en C₃-C₈, cycloalkyle en C₅-C₁₂ ou phénylalkyle en C₇-C₁₂, le noyau phényle pouvant être substitué par 1 à 3 groupements alkyle en C₁-C₁₂ ou alcoxy en C₁-C₁₂,
X représente un atome d'oxygène ou NR³,
R³ représente un reste R¹ ou un groupement de formule 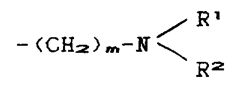
B représente le complément à un hétérocycle mono- ou polycyclique à 3-12 chaînons, saturé ou insaturé, qui peut contenir de l'azote, de l'oxygène ou du soufre en tant que 2 hétéroatomes supplementaires au maximum, les atomes d'azote supplémentaires pouvant porter, en tant que substituant, un atome d'hydrogène, un reste alkyle en C₁-C₈ ou un groupement de formule 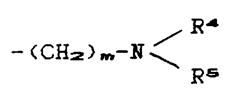 et l'hétérocycle pouvant encore comporter jusqu'à 3 groupements carbonyle ou substituants alkyle en C₁-C₈, phényle, phénylalkyle en C₇-C₁₂ ou cycloalkyle en C₅-C₁₂, et
A représente, dans le cas où n = 1,
un atome d'hydrogène ou un groupement alcényle en C₃-C₂₄, alkyle en C₁-C₆₀, qui peut être interrompu par 29 atomes d'oxygène ou restes NH³ au maximum et peut être substitué par 6 groupements hydroxy ou amino au maximum, un groupement cycloalkyle en C₃-C₁₂ qui peut être substitué par 3 restes alkyle en C₁-C₁₂ au maximum, un groupement bicycloalkyle en C₇-C₂₀ ou un groupement de formule 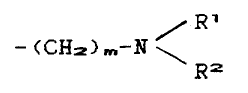 et
A représente, dans le cas où n > 1,
un groupement alkylène en C₂-C₂₄, alkylène en C₄-C₆₀ qui est interrompu par 5 groupements NH³ au maximum ou par 28 atomes d'oxygène au maximum, alkylène en C₃-C₁₂ qui porte jusqu'à 6 groupements hydroxy, alcoxy en C₁-C₄, amino ou hydroxyalkyle en C₁-C₃, cycloalkylène en C₅-C₁₂ ou bi- ou polycycloalkylène en C₇-C₂₄, les restes alkylène pouvant être aussi à plus de 2 liaisons lorsque n > 1.

2. Utilisation de composés selon la revendication 1 dans lesquels n est égal à 1 ou 2.

3. Utilisation de composés selon la revendication 1 dans lesquels R¹ et R² ou R⁴ et R⁵ sont, indépendamment l'un de l'autre, des atomes d'hydrogène ou des restes alkyle en C₁-C₄.

4. Utilisation de composés selon la revendication 1 dans lesquels R¹ et R² ou R⁴ et R⁵ sont, indépendamment l'un de l'autre, des atomes d'hydrogène ou des restes méthyle.

5. Utilisation de composés selon la revendication 1 dans lesquels R³ est un atome d'hydrogène, un reste alkyle en C₁-C₁₈ ou un reste de formule

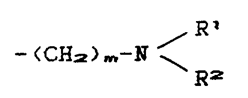

6. Utilisation de composés selon la revendication 1 dans lesquels B forme, avec l'atome d'azote, un hétérocycle à 5 ou 6 chaînons saturé ou insaturé.

7. Utilisation de composés selon la revendication 1 dans lesquels B forme, avec l'atome d'azote, un hétérocycle à 5 ou 6 chaînons qui peut encore contenir un atome de N ou de O.

8. Utilisation de composés selon la revendication 1 dans lesquels A est un atome d'hydrogène ou un reste alkyle en C₁-C₁₈ lorsque n = 1.

9. Utilisation de composés selon la revendication 1 dans lesquels, lorsque n > 1, A est un reste alkylène en C₂-C₉ qui peut être à 2-6 liaisons ou un reste alkylène en C₄-C₁₂ interrompu par -O- ou

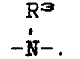

10. Utilisation de composés de formule générale (I) comme stabilisants de mise en oeuvre pour polyoléfines.

11. Utilisation de composés de formule générale (I) comme stabilisants de mise en oeuvre pour polyéthylène.

12. Utilisation de composés de formule générale (I) comme stabilisants de mise en oeuvre pour polypropylène.

13. Utilisation de mélanges synergiques de composés de formule générale (I) et/ou (II) et d'α-tocophérol comme stabilisants de mise en oeuvre pour matières thermoplastiques.

14. Utilisation de mélanges selon la revendication 13 comme stabilisants de mise en oeuvre pour polyoléfines.
